# EUROPEAN PATENT APPLICATION

(11) **EP 4 835 671 A1**
(43) Date of publication of application: **04.11.2026**
(21) Application number: 25193973.2
(22) Date of filing: 05.08.2025
(51) Int. Cl.: G06F 9/54, G06F 8/60, G06F 9/445, G06F 9/4401

(54) **DIGITAL PLATFORM FOR MANAGING DIGITAL TWINS AND METHOD OF CREATION OF A DIGITAL TWIN**

(30) Priority: 30.04.2025 US 202563797863 P
(71) Applicant: Unitas Tech SL, 28003 Madrid (ES)
(72) Inventor: Arteaga Barrueto, Carlos, 28003 Madrid (ES); Arteaga, Rebeca, 28003 Madrid (ES); Marrero, Abel, 28003 Madrid (ES); Mesa, Hector, 28003 Madrid (ES)
(74) Representative: Grünecker Patent- und Rechtsanwälte PartG mbB

(57) **Abstract**

The present invention relates to a Digital platform including a computing system, the platform being configured for managing digital twins and digital events that reflect real world events, the digital platform comprising an event handler configured to receive and process digital events that reflect real world events; a configuration module configured for a user to: declare properties of one or more digital event types wherein a digital event is an instance of such a digital event type that reflects a real world event; declare properties of at least one digital twin type, including declaring one or more digital events that affect a digital twin of that digital twin type; wherein at least one digital event that reflects a real world event is declared as a creation event of an instance of a digital twin of the digital twin type such that upon receipt and processing of the creation event by the event handler at least one instance of a digital twin of a digital twin type with the event declared as a creation event is created.

## Description

The invention relates to a digital platform that allows for the management of digital twins.

Digital twins in general describe a software entity in a computing system that resembles properties and behavior of a real world item or system.

Digital twins are known in order to for example simulate behavior of the real world item or system with the help of the digital twin.

With those prior art systems the problem exists that setting up digital twins typically involves coding source code in a programming language, that defines the properties and the behavior of the digital twin. Any changes to the characteristics or configuration of the digital twin need to be implemented in the source code that implements the digital twin, which is time consuming. Additionally, the number of identical twins needs to be set at the time of setting up the system and adding further twins needs changes in the code.

Prior systems often rely on static models or manual integrations for each physical asset.

The present invention allows a more flexible and easier way to set up and configure digital twins.

The above problem is solved with a digital platform according to claim 1 and a method according to claim 10. Optional embodiments are described in the dependent claims.

A digital twin according to the invention may be a digital twin of a real world item or real world system. The real world item may be a machine, a vehicle, any kind of utility. The twin can also be a twin of a system such as a delivery system for food or packages or a collection system for letters, packages or garbage. The real world system may also be a computing system such as a server farm, an amusement park, a building, a city with its traffic, a heating system, etc. There are no limits in what the digital twin may resemble.

A digital twin can be a structured digital entity. It may be runtime-bound. It may represent a physical or logical object, including for example one or more of its state, behavior, and interaction capabilities. The digital twin may be governed by a formalized schema or a domain specific language. The digital twin may be enabled by the formalized schema or a domain specific language to do event processing, and/or communication with other twins or digital systems in real time.

The digital twin may include semantically meaningful structures such as type, roles and interactions.

The digital twin may be created, updated and/or acted upon by received digital events.

The digital twin may process digital events and/or it may generate digital events, for example in order to communicate with other digital twins in the same digital platform or with digital systems outside of the digital platform.

For example a digital twin may communicate with other digital twins through digital events which reflect a change of status of a digital twin. This digital event, with which one instance of a digital twin communicates with another digital twin may for example include one or more of the following:
- the information about the time the change of status of the digital twin occurred,
- a location of the real world item or real world system that this digital twin reflects
- the ID of the digital twin
the information about the change of status, such as a changed data field of the digital twin. The digital platform is provided with an inference module that allows analyzing the status and the status changes of the digital twins. This inference module can use an artificial intelligence model to infer for example relations and/or correlations and/or dependencies between different digital twins and thereby between the real world items or real worlds systems they reflect.

The status of a digital twin may be defined by all the properties of a digital twin stored in the digital platform such as for example by all data stored within a digital twin and/or all data stored in the digital platform about the digital twin. The status may change in particular by the digital twin being provided with a digital event that changes data stored within the digital twin. The status may also change by information stored in the digital platform about the digital twin.

The digital platform may have a learning mode in which it receives information from the real world and processes it. The digital platform may also have a simulation mode, in which the digital twin simulates the behavior of the real world item or system. In this simulation mode the results of the inferring of the inference module may be used to change the status or the digital twins in the digital platform such as for example by communicating over digital events created by the digital twins or by the digital platform on behalf of the digital twins.

This communication between digital twins allows for flexible and scalable orchestration of digital twins as cooperative systems.

The disclosure relates to a digital platform that includes a computing system designed to manage digital twins and digital events that mirror real-world events. The digital platform comprises an event handler and a configuration module. The event handler is designed to receive and process digital events that reflect real-world events. The configuration module allows a user to declare properties of one or more digital event types and one or more digital twin types. This includes declaring one or more digital events that affect a digital twin of that digital twin type. At least one digital event that reflects a real-world event is declared as a creation event of an instance of a digital twin of the digital twin type. Upon receipt and processing of the creation event by the event handler, at least one instance of a digital twin of a digital twin type with the event declared as a creation event is created. This configuration allows for the efficient management of digital twins and digital events, providing a streamlined approach to reflecting real-world events in a digital environment.

In particular, in case the digital platform needs to provide several digital twins of the same kind the creation of the digital twin does not require any opening and amending of the source code. Rather, digital twins can be created upon receipt of a digital event, i.e. at deployment time, when the digital platform is already in use, and not at any coding or setting up time.

The digital platform comprises software and hardware. The hardware can be a single computer, a distributed computing network, a server farm of a cloud computing system or the like.

The software is installed on that hardware and provides certain functionality and modules as described in the present disclosure.

The digital platform may be connected to a communications network in order to be able to receive digital events. The digital platform is capable of receiving digital events that reflect real world events. A digital event may be a data package or several data packages, a file, a link or any means by a communication network to provide information about a real world event to the digital platform. The communications network may be a local network, internet and/or any wireless communication network.

The digital platform comprises an event handler that is capable of handling received digital events. The event handler is a software module implemented in the digital platform.

Further, the digital platform comprises a configuration module which is a software module implemented in the digital platform. This configuration module allows a user to declare properties of digital twin types and how they shall react to certain digital events that are received by the digital platform.

At least one digital event is declared as a creation event of an instance of a digital twin. This means that by the declaration of an event as a creation event for a digital twin type, the event handler is caused to handle the receipt of such a creation event by creating a digital twin as an instance of the digital twin type.

In short, a digital twin can be created by receipt of a digital event. Hence, this can be done in deployment time and no coding is required in order to create a new digital twin.

In particular in cases in which the digital platform is supposed to manage many instances of digital twins of the same kind (as specified by the declared properties of the at least one digital twin type) the number of which is previously unknown, the flexibility of this digital platform is helpful.

With this digital platform it is, for example, possible to create digital twins, even if at the time of the configuration of the digital twin types with the configuration module, the number of digital twins was not yet known or the time of creation of the digital twins was not yet known.

In particular it allows the receipt of a digital event and its correct handling by the event handler independently of whether or not a corresponding digital twin yet exists or not. In case the corresponding digital twin already exists the digital event can be used to update the status of the corresponding digital twin. In case a digital twin for the received digital event does not yet exist, the digital twin is created and the information from the digital event can be used to set the status of the digital twin.

In an optional feature, the configuration module allows a user to declare properties of digital event types and of the digital twin types with a human and machine-readable domain-specific language, such as with natural language terms. This feature enhances the user-friendliness of the platform, making it accessible to a wider range of users.

The natural language terms may for example be terms known from the English language or any other natural language, such as Spanish, French, German, Chinese or the like.

The configuration module can also allow a user to declare properties of a digital twin type, wherein the properties are provided in at least two event categories. These categories include the events that will affect an existing instance of a digital twin and the events which can cause the creation of a digital twin based on a declared digital twin type. This feature provides a more comprehensive and flexible approach to managing digital twins. In particular it allows the distinction between events that are supposed to enable the creation of a digital twin and events which do only otherwise affect an already existing digital twin such as e.g. by changing the status of the digital twin.

In another optional feature, the configuration module allows a user to declare properties of a digital twin type, wherein the properties include various elements such as an ID, a base digital twin type, an icon, a shape to be displayed in a map, a location to be displayed on a map, commands which a digital twin as an instance of a digital twin type may issue, and a human-readable description of the digital twin type. This feature provides a more detailed and customizable approach to managing digital twins.

The digital platform may also allow a user to declare events that do configure an existing instance of a digital twin. This feature provides a more dynamic and adaptable approach to managing digital twins. The configuration of a digital twin relates to changes of the digital twin other than creating it or changing its status by an event that affects a digital twin. These changes may include for example changing a location stored in the digital twin. It may also include changes to values that are typically set when a digital twin is created such as time of creation or visibility or the shape with which a digital twin is represented in a map. It may also be used to change the commands which a digital twin may issue according to the "Commands"-Section (see further below) of the declaration of its digital twin type.

In order to give a specific example for a configuration event the following explanations are provided. In the digital platform, there may be digital twins of real world items that have a chargeable battery. Such real world items maybe for example drones with a battery or electric vehicles such as electric cars. Now the event handler receives a digital event about a change of the maximum charging capacity of the battery. This event is declared to be a configuration event of the digital twins of the real world items that have a chargeable battery. In the digital platform, those digital twins are changed by changing the maximum battery charging capacity. After those digital twins have been changed according to the configuration event they may recalculate the relative charging level in percentage as the absolute maximum charging capacity has been changed (For example when the maximum charging capacity has been lowered the relative charging level may be increased from 50% to 60%). The new maximum charging capacity and/or the relative charging level in percentage may be updated e.g. on a map display on which the digital twins are shown. This example shows the difference of an event that updates the status of a digital twin (such as for example an event that communicates a new charging level of the battery) in comparison to an event that configures a digital twin.

In another optional feature, the digital events type include one or more declarations that a digital event as an instance of the digital event type has various information such as an ID, a base digital event type, a location, a time of occurrence, a time of reception by the event handler, and various data types. This feature provides a more detailed and comprehensive approach to provide information to the digital platform. As digital events convey information about real world events the declaration declares which kind of information can be conveyed by a digital event. Some of the information of the digital event type may be related to administrative information such as an ID or a time information. Other information (which may be called payload information) may be specific to the real world event such as the reading of a temperature, the encounter of two items in the real world, or any other information specific about real world events.

The digital platform may also include an authentication module, configured to check the authenticity of a user and an access rights module configured to enforce access rights of users to declarations of digital twin types and digital event types, created digital twins, and received events. This feature enhances the security and integrity of the digital platform.

In another optional feature, the digital platform comprises a map module configured to display a map of the real world and configured to read location information and/or shape information from digital twins, which are instances of digital twin types and to display the location and/or shape information on the displayed map. This feature enhances the visual representation of the digital twins and their corresponding real-world counterparts and helps users to evaluate the real world as reflected by the digital twin.

The digital platform may also be configured for queuing received events and for continuous processing of received events preferably in real time. This feature enhances the efficiency and timeliness of the digital platform's processing of digital events.

The invention also relates to a method of creation of a digital twin in a digital platform for a computing system. The method involves receiving a digital event that reflects a real-world event and that contains information about the real world event, processing the digital event by the event handler, checking the declarations of the properties of the digital twin types, checking if a digital twin as an instance of that digital twin type is already created, creating a digital twin as an instance of that digital twin type if according to the instance checking step no such digital twin has already been created, and optionally forwarding the received event to the created digital twin. This method provides a systematic and efficient approach to creating and managing digital twins in the digital platform.

In case the information of the received digital event that is to be processed by the created digital twin is already and directly and finally used when creating the digital twin it may not be necessary to forward the received digital event separately to the just created digital twin. However, from an implementation perspective it may be better to first create the necessary digital twin and then in a separate step forward the received digital event to the just created digital twin. Like this, all information of received digital events are forwarded in the same manner to a digital twin, either to an already existing one or to a just created one.

The method may further include a step of processing of the digital event by the event handler that includes determining in the instance checking step that a digital twin as an instance of that digital twin type, which contains a declaration of the received event as a creation event, is already created, and the digital event is forwarded to the determined instance. This ensures that events are forwarded to digital twins that already exist.

Further the method may include a step wherein processing the received digital event by the event handler includes a second declarations checking step in which the same received event is processed. Herein it is checked which declarations of digital twin types include the event as an event which affects a digital twin as an instance of a digital twin type. Then the received event is forwarded to all instances of digital twins of all digital twin types which declare the event as an event that affects the digital twin.

Any digital event forwarded to a newly created or an already existing digital twin can be used to update the digital twin.

The method may also include providing a user interface for a user to declare properties of digital twin types and digital event types, and to declare digital events that affect a digital twin of a declared digital twin type. This feature enhances the user-friendliness of the digital platform, making it accessible to a wide range of users.

In another optional feature of the method, the digital platform may also include an authentication step, where the authenticity of a user is checked, and an access rights enforcement step, where the access rights of users to declarations of digital twin types and digital event types, created digital twins, and received events are enforced. This feature enhances the security and integrity of the digital platform.

The method may also include displaying a map of the real world and reading location information and/or shape information from digital twins, which are instances of digital twin types, and displaying the location and/or shape information on the displayed map. This feature enhances the visual representation of the digital twins and their corresponding real-world counterparts.

The method may also include queuing received events and continuously processing received events preferably in real time. This feature enhances the efficiency and timeliness of the digital platform's processing of digital events.

In order to provide a better understanding of the present disclosure the following figures are provided, Here:
Fig. 1: shows an overview of the digital platform of an embodiment of the invention and the real world;
Fig. 2a/Fig. 2b: shows optional properties of the digital twin type (Fig. 2a) and of a digital event type (Fig. 2b);
Fig. 3: shows method steps of an embodiment of the invention;
Fig. 4: shows optional properties of a map according to an embodiment of the invention;and
Fig. 5: shows schematically the digital platform and its optional inference module.

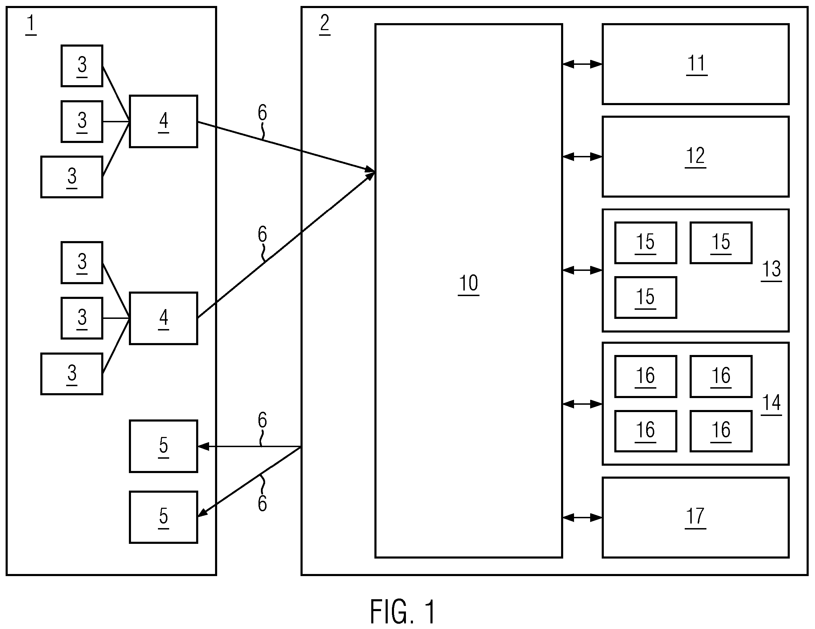

Fig. 1 shows a schematic representation of the real world 1 together with an overview of a possible embodiment of the digital platform 2. The digital platform 2 comprises an event handler 10 configured to receive digital events over a communications network 6. In the embodiment shown in Fig. 1 the digital events can be generated from event generators 4 in the real world 1.

An event generator 4 can be any device in the real world that can communicate with the event handler 10 over the communications network 6. The communications network may be a local network, the internet and/or a wireless network or combinations thereof.

In this digital platform, an event generator may be any source of a digital event that may be relevant for the digital platform. The event generator may be physical in the real world or it may be virtual in the real world such as implemented in a computing system in the real world.

It may be for example:
a physical sensor or actuator (temperature, GPS, camera, RFID, etc.),
a software module or microservice (analytics engine, rule-based workflow, Al inference, etc.),
an external enterprise system (ERP, CRM, logistics, payment gateway),
a user-interaction stream (mobile/web app, chatbot, social-network feed), or
any other component that can emit a (structured) digital event over MQTT, HTTP, AMQP, or similar protocols.

The event generator 4 is capable of generating digital events and to transmit the generated digital events to the event handler 10. The event generator 4 may e.g. comprise a sensor capable of sensing events or conditions in the real world 1. Such events typically may include real world objects 3.

The event generator 4 may for example comprise a temperature sensor, a humidity sensor, a noise sensor, a proximity sensor, a load sensor, a force sensor, a scanner such as a QR code scanner, a camera, a position sensor such as a GPS detector, a velocity sensor, an acceleration sensor, a current or voltage sensor, a magnetic field sensor or the like.

The event generator 4 may for example comprise a temperature sensor installed in a building in order to detect the temperature of a room or a location in the building. This event generator 4 may as well comprise a humidity sensor and/or a noise sensor. These sensors of the event generator 4 may be used to regulate room temperature, air conditioning or window positions.

A load sensor or a force sensor of an event generator 4 may be used to sense the status of a machine part that is subject to a load or a force.

A current or voltage sensor of an event generator 4 may be used to sense an electrical condition of an electrical part such as of a motor, a pump, ventilator, a CPU, a computer or any other electrical component.

A proximity sensor, a positioning sensor, scanner, or a camera of an event generator may be used to determine the position of a real world object 3 or it may be used to determine proximity between the event generator 4 and another real world object 3. For example a parcel or letter collection vehicle may comprise an event generator 4 and this event generator transmits digital events the include information about the position of the vehicle or about proximity to e.g. a letter box or any other geographical point.

A garbage collection truck may be provided with an event generator 4, which comprises a proximity sensor that detects the proximity of a garbage bin inside the garbage collection truck indicative of the truck having emptied the bin.

A camera may capture an image of the real world or a sequences of images of the real world and a classification algorithm may be used to identify objects in the image/images and label them. The information from such cameras e.g. the appearance of a certain kind of real world item such as a car, a van, a may then be communicated by an event generator to the digital platform 2.

The digital platform 2 comprises, apart from the event handler 10 a configuration module 11 that allows to configure the digital platform 2. The configuration module 11 may comprise a user interface with which a user may use the configuration module 11 to configure the digital platform. The configuration module 11 may in particular be used to provide declarations of properties of digital event types and of properties of digital twin types.

The declarations of the properties of the digital event types and of digital twin types can be stored in a declarations storage 12, which can be provided for this purpose.

Further, the digital platform 2 may comprise a digital twin storage 13, in which created digital twins 15 are stored and/or the digital platform 2 may comprise a received digital events storage 14 in which received digital events 16 are stored.

The digital twin storage 13 may comprise a database, memory of any kind and/or hard- and software to store previously generated digital twins and data related thereto.

The received digital events storage 14 may comprise a database, memory of any kind and/or hard- and software to store previously received digital events. Those received digital events may be stored for a predetermined time and/or only in a previously determined number in order not to store received digital events in an unlimited manner.

When the event handler 10 receives a digital event from an event generator 4, the event handler checks the declarations in the declarations storage 12 whether or not this event is declared to be a creation event of a digital twin type. Further, the event handler 10 checks if an instance of that digital twin type, which contains a declaration of the received event as a creation event, and which, based on information in the received event would be the necessary digital twin to which the event would need to be forwarded, is already created. This evaluation may typically include an evaluation of ID data within the received digital event in order to identify to which digital twin the event should be forwarded to. These ID data may be ID data that identify real world items such as the ID of a digital event creator of any other real world item identified in the received digital event. In case there is no such digital twin already created the event handler creates or causes to create an instance of that digital twin type, which contains the declaration of the received event as a creation event. Then the received event may be forwarded to the digital twin created as an instance of the digital twin type.

In short, the steps taken by the digital platform in case of receipt of a creation event are:
- Receive the creation event;
- Check if one or more digital twins need to be created and if yes do create the one or more digital twins as needed, otherwise do not create any digital twin;
- Forward the received creation event to the already existing or previously created digital twin(s).

In case the information of the creation event is already processed by the digital twin upon creation of it the forwarding step may not be necessary.

In this way, a digital twin can be created without having to change the code of a system that manages digital twins.

This procedure shall be further explained in a given embodiment as described as follows. In this embodiment the digital event creators 4 comprise temperature sensors that are installed in a building of the real world 1. The digital event creators can transmit information about the temperature, the time of measurement of the temperature and of an ID of the digital event creator in a digital event to the event handler 10. This digital event shall be called temperature reading event in the following. In the digital platform the properties of a digital twin type of a temperature sensor is declared and this declaration is stored in the declaration storage 12. This digital twin type shall be called temperature sensor twin type in the following. In the declaration of the temperature sensor twin type the temperature reading event is declared as a creation event of the temperature sensor twin type. The event handler 10 checks that in the declarations of the temperature sensor twin type, this digital event is declared as a creation event of that digital twin type. The event handler also checks if a temperature sensor twin with the given ID provided in the temperature reading event already exists or not. In case a temperature sensor twin for a temperature sensor with the given ID does not exist, the event handler creates or causes to create a temperature sensor twin for this given ID and passes the temperature reading event to the just created temperature sensor twin. The digital platform then can use the information of the temperature reading event to set the temperature value in the digital twin. The created digital twin may be stored in the digital twin storage 13 for later use.

In case the digital twin with the ID provided by the temperature reading event does already exist, the event handler does forward the temperature reading event to the temperature sensor twin and a temperature value in the digital twin can be updated based on the temperature reading event.

In this way the digital platform does not need any human intervention e.g. in case a new temperature sensor is installed in the building as the system is capable of creating a new digital twin for a new temperature sensor without human intervention.

Once the digital event has been handled by the event handler it may be stored in the received digital events storage 14 for later use.

The temperature reading event may comprise more information than described above according to the disclosure of this text. The event may for example further comprise the information about a geographical position in two or three dimensions of the digital event generator. The information about a geographical position in two dimensions may describe a point on the surface of the globe and in three dimensions it may additionally include the height of the temperature sensor over sea level or over ground.

Location information stored in digital events or digital twins may be provided in different abstract forms. It may be provided as a point in two or three dimensions or it may be provided as a semantic description such as "Zone A" or "Room B" or "Street C" or the like.

The location information may come from a GPS or GNSS-System, from a RTLS or an indoor tracking system and/or may use floor plans and/or geographic references.

The digital platform 2 may furthermore comprise an authentication module, configured to check authenticity of a user and an access rights module configured to enforce access rights of users to declarations 20, 21 of digital twin types and digital event types, created digital twins and received events.

The digital platform 2 may provide a queue for incoming received events so that they can be stored before they are processed by the event handler 10. The queue may be provided by the event handler 10. This way received events can be processed continuously and in order of receipt. In case the queue is practically almost empty, the events can be processed (practically) in real time.

The digital platform 2 may additionally comprise a map module configured to display a map 40 of the real world and configured to read location information and/or shape information from digital twins, which are instances of digital twin types and to display the location and/or shape information on the displayed map. The map module may also provide updates to the displayed map in accordance with updated digital twins. Digital twins may for example be updated based on a changed status of a digital twin or updated information stored in the digital twin.

The digital platform 2 may also act on the real world 1 based on commands issued by the digital twins, as declared in the digital twin type declarations. For example, the digital platform may instruct actuators to move an item 5 in the real world, or to change electrical power supply to an electrical consumer etc. For example, an air-conditioning system may be instructed by a digital twin of the air conditioning system to open a window, a valve or change the power of a pump or a ventilator. In order for the digital platform 2 to communicate with items 5 in the real world 1 the communications network 6 can be used. A separate communications network other than the one used for receipt of digital events can be used for communication with the real world items 5 as well.

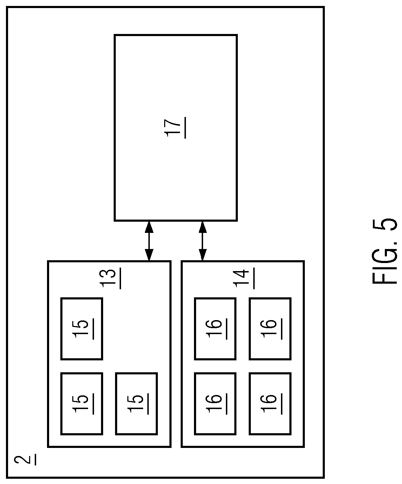

The optional inference module 17 shown in Fig. 1 will be further described below in relation to Fig. 5.

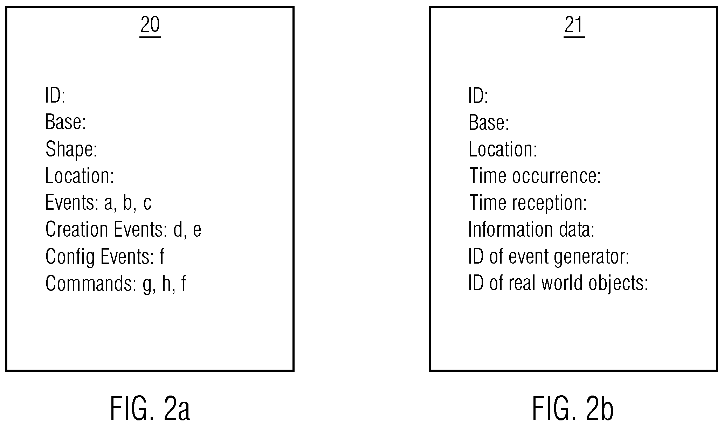

Fig. 2a shows a schematic embodiment of the user interface which displays to a user the declarations of a digital twin type. The declarations shown in this figure are an example only and there may be more or less declarations.

The first shown declaration contains an ID of the digital twin type. This can be a name or a number that uniquely within the digital platform identifies this digital twin type.

The ID of an instance of a digital twin may be provided by the digital platform. This may be done automatically and no declaration of this data field in the declaration of the digital twin type may be necessary. The ID of an instance of a digital twin may be created by the digital platform upon creation of the instance of the digital twin and it may be based for example on the ID of a real world item which was included in a received digital event that caused the creation of the digital twin. Such an ID of a digital twin may be created based on a scheme such as including predefined data such as a date or a device type of a consecutively generated number.

The optional declaration "Base" may declare that this digital twin type is based on a digital twin type base and in the declaration "Base" the ID of the digital twin type base can be provided. A digital twin type may in this way be based on declarations of a base digital twin type base. The digital platform may be provided with a set of digital twin type bases which can be used in the declaration of a digital twin type. A digital twin type base may be used by several other digital twin type declarations. Optionally only a digital twin type base may be used in the "Base" declaration, but not another digital twin type. The declarations in the digital twin type base may provide generic data fields of a digital twin type such as the datafield of an ID, Type, Location or the like.

The optional declaration "Shape" may be used to declare the shape with which a digital twin as an instance of a digital twin type will be displayed in a map. This declaration may for example be set to "Point", "Circle", "Square", "Polygon" or any other two dimensional shape that may be displayed on a map.

Optionally, it is also possible to provide an icon in the declaration, with which a digital twin as an instance of this digital twin type may be displayed on a map 40 (see below).

The optional declaration "Location" may be used to declare a location, such as a default location, of a digital twin created as an instance of a digital twin type. In an instance of the twin this field may be filled with the actual location of the item in the real world of which the digital twin is the twin.

The optional list of "Events" declares which digital events do affect a digital twin as an instance of a digital twin type. If a digital event is declared in "Events" in the declaration of a digital twin type then the event handler uses this to forward a received digital event to all digital twins which are instances of a digital twin type. Those digital twins may then use the information provided in the digital event to update their status such as updating (status) data fields in the digital twin.

The list of "Creation Events" declares which events shall cause the creation of a digital twin based on a digital twin type. In case the event handler receives a digital event that is listed as a creation event in the "Creation Events" list of a digital twin type and a digital twin necessary to receive the digital event from the event handler does not exist than the event handler creates or causes to create a digital twin according to the declaration of the digital twin type, which has the declaration of the digital event as a "Creation Event".

In the declaration also an optional list of "Config events" or "Configuration Events" may be provided. Events of this kind can be used to reconfigure a digital twin after it has been created. Which events can reconfigure a digital twin is declared in this section "Config events" or "Configuration Events".

The "Commands" section of the declaration includes commands that can be used by a digital twin as an instance of the digital twin type that can be executed or initiated by the digital twin in order to create an effect in the real world, such as on items 5 shown in Fig. 1. This can be for example the regulation of an air-condition in a building that is provided with temperature sensors as described above.

The details of the commands are provided in the digital platform. They are digital messages that typically may include the information about an issuer of the message, a recipient of the digital message, an ID of the massage such as name, payload data that are specific to the command such as for example a set temperature for an air conditioning system or an open/close command for a valve or the like.

In the declarations additionally a human readable description of the digital twin type may be provided. This is in particular helpful for documentation purposes.

Further, optionally a user or a group of users can be specified within the declarations of a twin type, that are allowed to access instances of the digital twin type such as for viewing them on a map or in order to access data stored in an instance of the digital twin type. In order to specify a user or a group of users keywords of the domain specific language can be used.

A user can edit the declarations in the user interface for example with a text editor or with any other user interface elements.

In the user interface a domain specific language can be used that does use keywords in a natural language, here in English. The domain specific language includes e.g. the terms "Base", "Shape", "Location", "Events", "Creation Events", Configuration Events" and "Commands". Other terms or less terms may be used as well. Those terms may be used in combination with specific symbols that do mark those terms as part of the terms that are defined by the domain specific language. For example each term used may be preceded and/or followed by a hashtag symbol '''#'' or an "at" Symbol "@". Also other terms than "Base", "Shape", "Location", "Events", "Creation Events", Configuration Events" and "Commands" may be used for the same declaration. E.g. instead of "Base" "Basis" may be used or instead of "Shape" "Form" may be used, etc.

In Fig. 2b an embodiment of the declaration of a digital event type is shown. This is a schematic representation of the way the declaration could be shown in a user interface so that a user can edit the declaration. A user can edit the declarations in the user interface for example with a text editor or with any other user interface elements.

The first shown declaration contains an ID of the digital event type. This can be a name or a number that uniquely within the digital platform identifies this digital event type.

The received digital events can be provided with a platform specific ID, which is unique with the platform, e.g. upon receipt of the digital event by the event handler.

The optional declaration "Base" may declare that this digital event type is based on a digital event type base and in the declaration "Base" the ID of the digital event type base can be provided. The digital platform may be provided with a set of digital event type bases which can be used in the declaration of a digital event type. A digital event type base may be used by several other digital event type declarations. Optionally only a digital event type base may be used in the "Base" declaration, but not another digital event type. The declarations in the digital event type base may provide generic data fields of a digital event type such as the data field of an ID, Type, Location or the like.

The optional declaration "Location" may be used to declare a location, such as a default location, of a digital event created as an instance of a digital event type. In an instance of the event type, i.e. a digital event that is an instance of such a digital event type that reflects a real world event this data field can be used to indicate the location in the real world at which the real world event took place.

The optional declaration "Time occurrence" may be used by an instance of the event type to indicate the occurrence of the event in the real world that is reflected by the digital event, which is an instance of such a digital event type.

Further the optional declaration of "Time Reception" can be used by e.g. the event handler, to store the time at which the digital event has been received by the digital platform.

The optional declaration "Information data" can be used to store the payload of the digital event such as a sensor reading, mentioned above. For example, a declaration of a temperature may be provided here which indicates the temperature measured by the sensor of a digital event generator. This declaration may have more than one data field, in order to provide e.g. more than one sensor reading. For example, apart from a temperature reading a humidity reading or a noise level reading may be stored in a digital event created in accordance with this declaration.

This payload information may be provided in many different digital formats. The formats may include one or more selected form the group which comprises: integer, boolean, string, number, array, uint, int 16, uint 16, float, double, iso8601, date, location, location point, location circle, location rectangle, location linestring, location polygon, aimdts, json and imageid.

In the event declaration, optionally the ID of an event generator may be provided. This may be used e.g. by the event handler to check in the instance checking step whether or not an instance of a digital twin related to the event generator is already provided or not.

Further, optionally an ID of a real world object may be provided in the declaration. This may be used to provide further information about the real world event, such as information about real world objects that are involved in the real world event. To provide an example this ID of the real world event may be the ID of a shipment or a parcel, which has been delivered or collected in a real world event and the ID of the event generator may be the ID of a scanner scanning a code of a shipment or a parcel.

This ID of a real world object may be used e.g. by the event handler to check in the instance checking step whether or not an instance of a digital twin related to the real world object is already provided or not.

Further, optionally a user or a group of users can be specified within the declarations of a digital event type, that are allowed to access instances of the digital event type such as for viewing digital events in the system such as viewing them on a map or in order to access data stored in an instance of the digital event type. In order to specify a user or a group of users keywords of the domain specific language can be used.

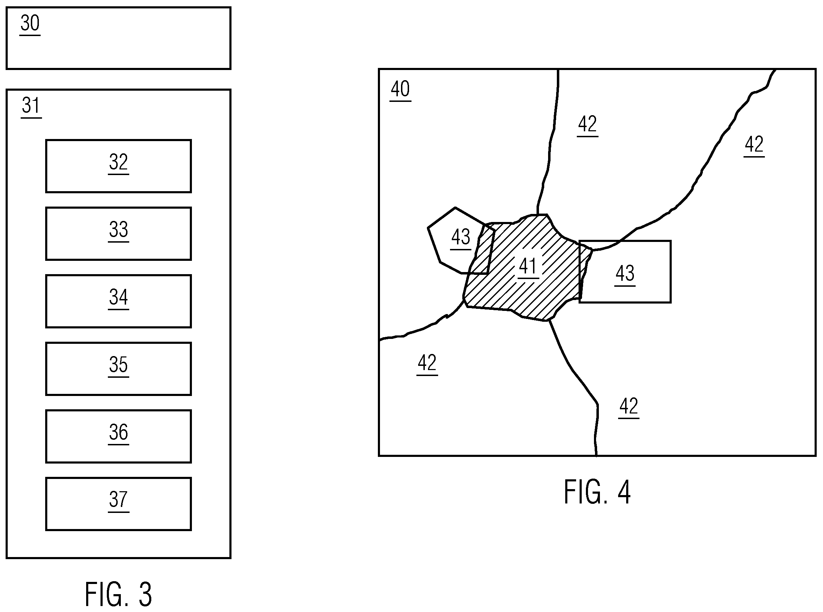

In Fig. 3 different steps of an embodiment of a method according to an embodiment of the invention are disclosed. In the Figure a receiving step 30 is shown, in which the event handler 10 receives a digital event that reflects a real world event. This digital event contains information about the real world event as described above. It may contain for example an ID of the event generator, it may contain the ID of one or more real world objects involved in the event. It may contain payload data such as sensor readings as explained above etc.

In the next step 31 the digital event received is processed by the event handler 10 in the digital platform 2. This includes a declarations checking step 32 in which the declarations 20 of the properties of the digital twin types are checked if any of those declarations 20 includes a declaration of the received event as a creation event of a digital twin type. The declarations to be checked may e.g. be provided in the declarations storage 12, mentioned above.

The result of this checking step may be one or more twin types, which include declarations which do contain the received event as a creation event. The event handler can therefore perform the following steps for only one twin type or for more than one twin type.

To give an example of the case where more than one twin type is provided as a result of the checking step, the event may relate to the delivery of a shipment, which is documented by a scanner. The scanner acts as an event generator and the shipment, such as a parcel, is a real world object that has an ID of a real world object such as a shipping number. In case the event of the delivery of the shipment is received by the event handler 10 both the twin type of the scanner (scanner twin type) as much as the twin type of the shipment (shipment twin type) may be provided in the digital platform with declarations of the shipment event as a creation event.

Next, for each twin type that results from the declarations checking step, an instance checking step 33 is performed. Hence, there may be only one instance checking step 33 or more than one instance checking step 33 depending on the number of twin types determined in the declarations checking step 32. In the instance checking step it is checked if a digital twin 15 as an instance of that digital twin type, which contains a declaration of the received event as a creation event, and which based on information in the received event, in particular ID information about real world items, would be the necessary digital twin to which the event would need to be forwarded, is already created. E.g. based on ID information in the information in the received event it is checked whether or not a digital twin already exists to which this received digital event should be forwarded. To continue with the example mentioned above, in case the event relates to the delivery of a shipment, it can be checked whether or not an instance of the shipment twin type already exists with the same ID of the shipment as provided in the digital event. Further, it can be checked whether or not a digital twin of the scanner twin type with the ID provided in the received digital twin already exists.

Next a creating step 34 is performed in which a digital twin 15 as an instance of that digital twin type is created, which contains the declaration of the received event as a creation event, in case that no digital twin 15, the digital type of which contains a declaration of the received event as a creation event, has already been created according to the instance checking step 34.

To continue with the above example, in case no scanner twin has already been created with the ID of the scanner of the received digital event such digital twin will now be created with the ID of the scanner as provided in the digital event. Equally, a digital twin of the shipment may be created in case it did not exist beforehand with the ID of the shipment as provided in the digital event.

As can be seen here, this way of handling the creation of digital twins allows the system to be able to fully handle the events received from the scanner even if the scanner has not been used or the information about the scanner has not been provided to the digital platform otherwise in advance. Hence, the system is very flexible in creating new instances of digital twins at the time they are required and not beforehand, i.e. in a separate time consuming step.

Once one or more digital twins are created in the creation step 34 , the received event may be forwarded in the optional forwarding step 35 within the digital platform to the created digital twins. Like this, the received digital twin can be handled according to the configuration of the digital twin. In continuation of the above example the digital twin of the shipment may be provided with the status "delivered". The digital twin of the scanner may be provided with the shipment number of the delivered shipment and with the time of delivery. Additionally, for example a counter within the digital twin, that is to count the number of deliveries, may be set to 1.

It is to be noted that a received digital event may be forwarded to only one digital twin, but it may also be forwarded to more than one digital twin.

In this case in the instance checking step it is determined that a digital twin 15 as an instance of that digital twin type, which contains a declaration of the received event as a creation event, is already created, and the digital event is forwarded to the determined instance. In the above example, if, for example, the digital twin for the scanner with the ID provided in the digital event already exists the counter mentioned above may be increased by 1.

With the digital platform described above it is possible to flawlessly receive and process digital events that need digital twins to process them internally even without a single digital twin even created at the time of receipt of the digital event by the digital platform.

A received digital event may be forwarded to one or more digital twins created in the method in the creating step 34 and to one or more digital twins created in a previous execution of the method initiated by the receipt of another digital event.

The received digital events may not always be used to check the necessity of creating a new digital twin. In case the digital event is declared as an event that does affect a digital twin as an instance of a digital twin type it is forwarded to the digital twin in case the digital twin exists. In case such digital twin does not exist and the event is not declared as a creation event for any digital twin type the received digital event might only be stored in the received event storage 34 or it may be discarded entirely, i.e. not stored in the digital platform.

In Fig. 4, a map 40 is shown, which can be displayed in a user interface provided to a user of the digital platform. The map shows e.g. a city 41, together with streets 42. In that map 40 images such as icons or shapes 43 of digital twins are displayed. This display step is based on location information provided in each digital twin and based on shape information in each digital twin. The digital twin on the right side of the city 41 has e.g. a rectangular as a shape and is for example centered around a position provided in the locations data of the digital twin. The rectangular may as well be provided with a corner such as the upper left corner of the rectangular at the location provided in the digital twin. The digital twin 43 provided on the left side of the city 41 has a polygon provided as its shape and is accordingly displayed with such polygon. Any corner of the polygon may be given by the location information of the digital twin.

The color and/or the size or any text displayed in connection with the image of the digital twin of the display of the digital twin may be used to report on a predefined status of the digital twin.

As the location or status or information within the digital twin may be updated according to the explanation above or below, that displaying of the map may be updated as well in order to reflect those changes of the digital twins.

Instead of a map equally a floor plan of a building may be displayed together with the images of the digital twins and the digital events as explained for the display of the maps. Such floor plans of buildings may also be displayed together with maps that show the area surrounding such a building the floorplans of which are shown.

The digital platform 2 may be provided with an optional inference module 17 as shown in Fig. 1 and with more details in Fig. 5.

The inference module may apply unsupervised graph-analysis over received events and/or twin state changes taking e.g. into account time, location, who and what to automatically infer relations (e.g. causal chains, resource contention). No predefined rules may be needed. The digital platform learns interactions (e.g. which drone twins often reroute after road-block twins update). These inferred relations then feed back as simulated 'what-if' events in the simulation mode.

This inference module 17 may have access to the digital twin storage 13 and the received event storage 14. The inference module 17 may be provided with one or more artificial intelligence models and include machine learning functionality in order to train the artificial intelligence model.

The inference module 17 can infer relations such as correlations and/or dependencies of digital twins 15 among each other and/or between received digital events within the digital platform. These relations may for example be that shortly after one particular digital twin receives one particular kind of digital event another digital twin may receive another digital event. This would be a temporal correlation between two events.

To continue the example of the digital platform having digital twins that reflect all or components of an air conditioning system, a drop or increase in temperature in one temperature sensor may be typically followed by a drop or increase in temperature by another temperature sensor due to those sensors being close together and being affected e.g. by the opening of a window.

The inference module 17 may evaluate the information of the received digital events 16. For this in particular the information related to time and location can be used, as temporally close and/or spatially close events have a high likelihood of having a relation with each other, that may be inferred by the inference module. For this the inference module reads optionally the information about the ID of a digital event, the time of occurrence stored in the digital event, the location of the occurrence stored in the digital event and what has happened (payload) stored in the digital event.

The inference module 17 may infer the relations mentioned above in particular when the digital platform is in a learning mode. In this learning mode the digital platform receives digital events and infers information from those received digital events and the digital twins in the digital platform.

The information produced by the inference module by evaluating the digital twins and/or the received digital events may be used in a simulation mode of the digital platform, in which the digital platform updates the status of the digital twins without receiving digital events from the real world. In this simulation mode, the digital platform creates digital events that reflect status changes of the digital twins such that the digital twins simulate the behavior of the real world items or real world systems they reflect.

With the inference module 17 the relations between real world items and the corresponding digital twins that reflect them, can be inferred without the need to code them into a software. The relations can be inferred and used later in the simulation mode without user input. This allows for inferring relations even in systems for which it would be too complex or to difficult to model them or modeling them by hand by coding software would not be possible because the relations are not known by humans.

Since the information in the payload of a digital event is not pre-prescribed by the platform but is determined by digital event generator that creates a digital event the inference module needs to be able to understand the semantic content of such information. For this purpose the inference module may be provided with a natural language model capable of inferring semantic information from the information provided in a received digital event.

The digital platform may also be in a mixed mode in which it does receive digital events from the real world but does at the same time use the inferred relations to simulate the behavior or the real world item or real world system based on the received digital events. Such a simulation may for example be helpful to take decisions about a digital twin issuing a command as declared in the "Commands" section of the declaration. In this way the digital twin may be used to issue commands, which do have an effect in the real world based on a received digital event and based on relations inferred by the inference module 17. For example in an air conditioning system a decision about cooling or heating a room may be based on a received digital event relating to a temperature reading and the inferred relation that at a certain time heating or cooling a room may be helpful or have no effect on that room temperature or the like.

### List of Reference Signs:

1 Real world
2 Digital platform
3 Real world object
4 Real world event generator
5 Real world item
10 Event handler
11 configuration module
12 Declarations storage
13 Digital twin storage
14 received event storage
15 digital twin
16 stored digital event
17 inference module
20 digital twin type declaration
21 digital event type declaration
30 receiving step
31 processing step
32 declarations checking step
33 instance checking step
34 creating step
35 optional forwarding step
36 second declarations checking step
37 map displaying step
40 map
41 city
42 streets
43 image of digital twin

## Claims

1. Digital platform (2) including a computing system, the platform being configured for managing digital twins (15) and digital events (16) that reflect real world events, the digital platform (2) comprising
an event handler (10) configured to receive and process digital events that reflect real world events;
a configuration module (11) configured for a user to:
declare properties of one or more digital event types wherein a digital event is an instance of such a digital event type that reflects a real world event (1);
declare properties of at least one digital twin type, including declaring one or more digital events that affect a digital twin (15) of that digital twin type;
wherein at least one digital event that reflects a real world event is declared as a creation event of an instance of a digital twin (15) of the digital twin type such that upon receipt and processing of the creation event by the event handler (10) at least one instance of a digital twin (15) of a digital twin type with the event declared as a creation event is created.

2. Digital platform (2) according to claim 1, wherein the configuration module (11) allows a user to declare properties of digital event types and of the digital twin types with a human and machine readable domain specific language, such as with natural language terms.

3. Digital platform (2) according to any of the preceding claims, wherein the configuration module (11) allows a user to declare properties of a digital twin type, wherein the properties are provided in at least two event categories, wherein the two event categories include:
the events that will affect an existing instance of a digital twin;
the events which can cause the creation of a digital twin based on a declared digital twin type.

4. Digital platform (2) according to any of the preceding claims, wherein the configuration module (11) allows a user to declare properties of a digital twin type, wherein the properties include one, two, three or more of the following properties:
- An ID
- A base digital twin type
- An icon
- A shape to be displayed in a map (40)
- A location to be displayed on a map (40)
- Commands which a digital twin as an instance of a digital twin type may issue, wherein such commands are for taking effect in the real world (1)
- A human readable description of the digital twin type (20).

5. Digital platform (2) according to any of the preceding claims, wherein the configuration module (11) allows a user to declare events that do configure an existing instance of a digital twin.

6. Digital platform (2) according to any of the preceding claims, wherein the digital events type include declarations that a digital event as an instance of the digital event type has one, two, three or more of the following information:
- an ID
- a base digital event type
- a location
- a time of occurrence
- a time of reception by the event handler (10)
- One or more data selected from the group of datatypes that include: integer, Boolean, string, number, array, uint, int16, uint 16, float, double, iso8601, date, location, location point, location circle, location rectangle, location linestring, location polygon, aimdts, json, imageid
- An ID of a real world (1) generator of the event (4)
- one or more IDs of one or more real world objects (3)
- a user and/or a group of users that are allowed to access or process the information in the digital event.

7. Digital platform (2) according to any of the preceding claims, wherein the platform includes an authentication module, configured to check authenticity of a user and an access rights module configured to enforce access rights of users to declarations (20, 21) of digital twin types and digital event types, created digital twins and received events.

8. Digital platform (2) according to any of the preceding claims, wherein the platform comprises a map module configured to display a map (40) of the real world (1) and configured to read location information and/or shape information from digital twins, which are instances of digital twin types and to display the location and/or shape information on the displayed map (40).

9. Digital platform (2) according to any of the preceding claims, wherein the platform is configured for queuing received events and for continuous processing of received.

10. Digital platform (2) according to any of the preceding claims, wherein the platform comprises an inference module which infers relations between received digital events and/or changes of status of digital twins based on at least one or more of the following:
- a time of occurrence as stored in digital events and/or in a digital twin
- location information as stored in digital events and/or in a digital twin
- IDs of digital events and/or ID of digital twins to which a digital event is forwarded or an ID of a digital event generator, such as a digital event generator in the real world (1)
- the one or more data stored in digital events and/or in a digital twin.

11. Method of creation of a digital twin (15) in a digital platform (2) for a computing system the digital platform (2) being configured for managing digital twins (15) and digital events that reflect real world events, the platform comprising:
• an event handler (10) configured to receive and process digital events that reflect real world events, and
• and stored declarations (20, 21) of the properties of digital twin types and of the properties of digital event types;
the method comprising:
• receiving by the event handler (10) a digital event that reflects a real world event and that contains information about the real world event;
• processing the digital event by the event handler (10), this processing including:
- a declarations checking step (32) in which the declarations (20) of the properties of the digital twin types are checked if any of those declarations (20) includes a declaration of the received event as a creation event of a digital twin type;
- an instance checking step (33) in which it is checked if a digital twin (15) as an instance of that digital twin type, which contains a declaration of the received event as a creation event, and which, based on information, in particular ID information of one or more real world items, in the received event would be the necessary digital twin to which the event would need to be forwarded, is already created;
- a creating step (34) in which a digital twin (15) as an instance of that digital twin type is created, which contains the declaration of the received event as a creation event in case that no digital twin (15), the digital type of which contains a declaration of the received event as a creation event, has already been created; and
- optionally a forwarding step (35) in which the received event is forwarded to the digital twin (15) created as an instance of the digital twin type.

12. Method according to claim 11, wherein the processing of the digital event by the event handler (10) includes determining in the instance checking step (33) that a digital twin (15) as an instance of that digital twin type, which contains a declaration of the received event as a creation event, is already created, and the digital event is forwarded to the determined instance.

13. Method according to any of the preceding method claims, wherein processing the received digital event by the event handler (10) includes a second declarations checking step (36) in which the same received event is processed and in which it is checked which declarations (20) of digital twin types include the event as an event which affects a digital twin as an instance of a digital twin type and forwarding the received event to all instances of digital twins of all digital twin types which declare the event as an events that affects the digital twin.

14. Method according to any of the preceding method claims, wherein information received by the digital platform (2) in the digital event is used to update the digital twin (15) to which the received digital event has been forwarded.

15. Method according to any of the preceding method claims, wherein user access to received digital events (16) is limited based on stored access rights stored in the digital platform (2).

16. Method according to any of the preceding method claims, wherein in a map displaying step (37) a map (40) of the real world (1) is displayed and based on location and/or shape information stored in digital twins as instances of digital twin types are displayed on the map (40), wherein the displayed information can be updated based on any received digital event and/or based on any updated information of a digital twin.
